# FASCICULE DE BREVET EUROPEEN

(11) **EP 0 544 567 B1**
(45) Date de publication et mention de la délivrance du brevet: **22.02.1995**
(21) Numéro de dépôt: 92403113.1
(22) Date de dépôt: 19.11.1992
(51) Int. Cl.: B23K 26/00

(54) **Procédé de revêtement par laser de pièces cylindriques**
Verfahren zum Auftragsschweissen durch Laser an zylindrischen Werkstücken
Procedure for build-up weld by laser on cylindric workpieces

(30) Priorité: 25.11.1991 FR 9114493
(43) Date de publication de la demande: 02.06.1993
(73) Titulaire: GEC ALSTHOM SA, 75116 Paris (FR)
(72) Inventeur: Com-Nougue, Jacques, F-75012 Paris (FR); Cariou, Frédéric, F-91550 Paray Vieille Poste (FR); Kerrand, Emmanuel, F-91100 Villabe (FR); Coulon, André, F-90160 Bessoncourt (FR)
(74) Mandataire: Vigand, Privat

(56) Documents cités:
- EP-A- 0 070 773
- EP-A- 0 293 945
- PATENT ABSTRACTS OF JAPAN vol. 12, no. 145 (M-693)(2992) 6 Mai 1988 & JP-A-62 267 079 (KOBE STEEL LTD) 19 Novembre 1987

## Description

La présente invention concerne un procédé de revêtement par laser de pièces cylindriques dans lequel après surfaçage de la surface à revêtir, on fait tourner la pièce autour de son axe, on émet un faisceau laser partiellement focalisé sur la surface de la pièce et on projette une poudre pré-alliée ayant la composition de l'alliage à déposer dans la zone d'interaction entre le faisceau et la pièce, voir p.ex. EP-A-70 773.

Une telle technique est utilisée, notamment pour la réparation de pièces notamment des tiges de commande de turbines à vapeur en rechargeant de la matière par projection de poudre dans un faisceau laser. Ceci nécessite un grand apport de chaleur et on observe des déformations de la pièce.

Pour éviter ces déformations selon une première réalisation, on effectue un premier cycle de dépôts de cordons selon plusieurs génératrices non jointives réparties sur la pièce, puis on effectue plusieurs cycles semblables au premier jusqu'à recouvrir la totalité de la surface de la pièce.

Selon une seconde réalisation on effectue des passes hélicoïdales sur une faible largeur de la pièce en procédant par passes symétriques par rapport à un plan vertical orthogonal à l'axe de la pièce jusqu'à recouvrir la pièce.

L'invention va maintenant être décrite plus en détail en se référant à deux modes de réalisation particuliers cités à titre d'exemples non limitatifs et représentés par des dessins annexés.

La figure 1 représente une première réalisation de procédé de revêtement selon l'invention.

La figure 2 représente une coupe de la pièce de la figure 1.

La figure 3 représente une seconde réalisation du procédé de revêtement selon l'invention.

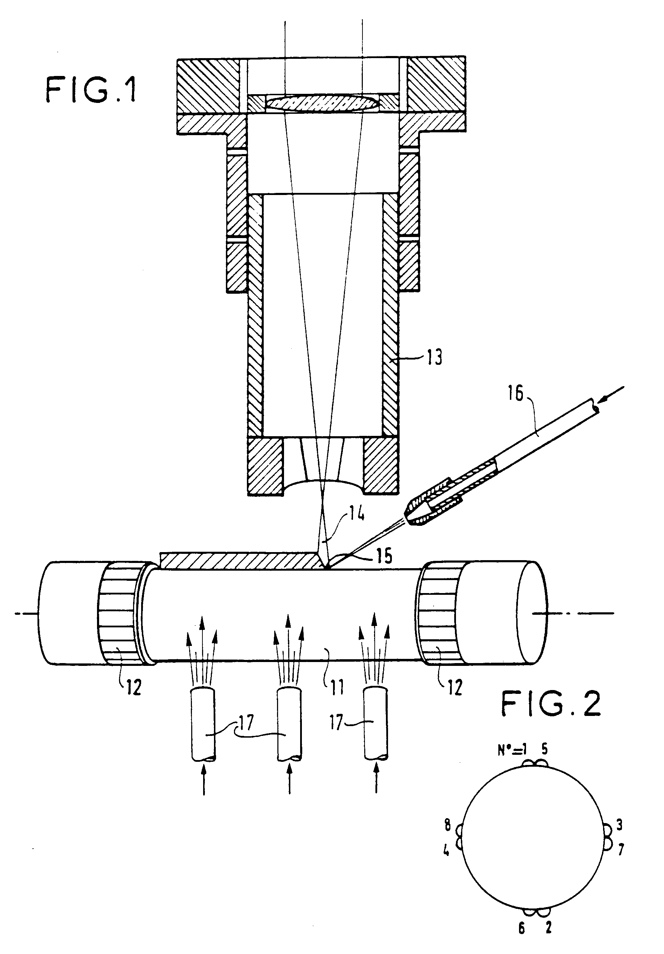

La pièce cylindrique à revêtir 11 peut être entraînée en rotation autour de son axe et est munie à ses deux extrémités de bagues de protection 12 (voir figure 1).

Un générateur laser à CO₂13 émet un faisceau laser 14 partiellement focalisé sur la surface de la pièce 11, si bien que ce faisceau 14 frappe la pièce selon une zone 15. Dans cette zone 15, on projette une poudre pré-alliée ayant la composition de l'alliage à déposer. La poudre avec un gaz porteur est projettée par une buse 16.

Des buses 17 projettant un gaz de refroidissement sont dirigées vers la surface de la pièce.

Selon l'invention on déplace la laser 13 et la buse 6 parallèlement a une génératrice de la pièce 11. On effectue ainsi le dépôt d'un cordon d'alliage selon une génératrice 1 puis on tourne la pièce de 180° et on dépose le cordon n°2; la pièce est ensuite tournée de 90° et on dépose le cordon n°3; enfin la pièce est tournée de 180° et on dépose le cordon n°4 (voir figure 2). Le premier cycle est ainsi terminé. On recommence un deuxième cycle semblable en déposant les cordons 5, 6, 7, 8 à côté respectivement des cordons 1, 2, 3, 4. On continue ainsi jusqu'à recouvrir la surface.

La pièce ainsi revêtue n'a pas subi de déformations notables et ne nécessite qu'un usinage de finition minimum.

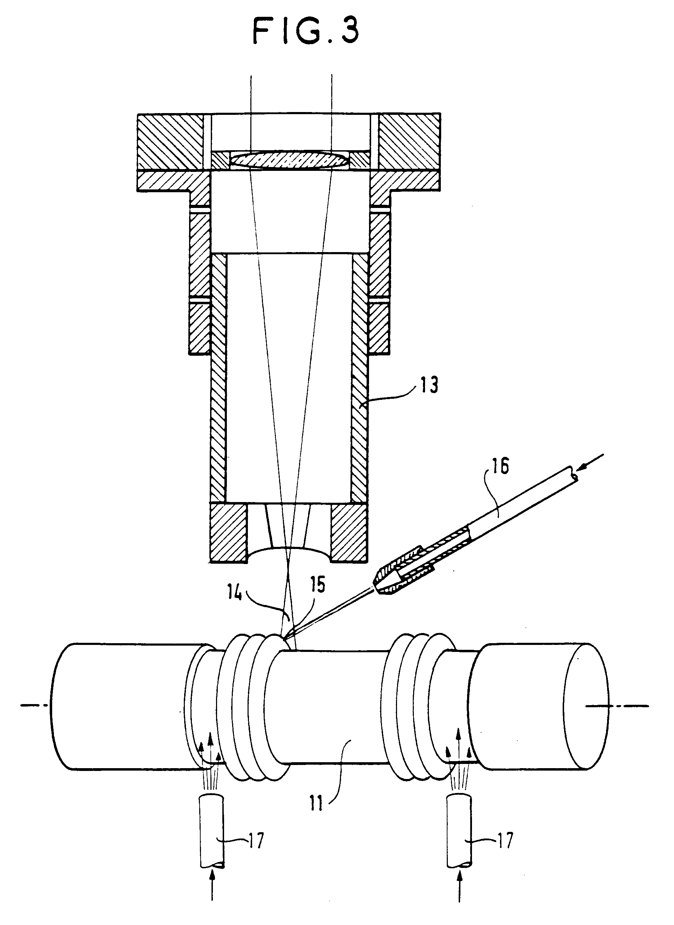

Dans la variante de procédé selon la figure 3, la pièce 11 est entraînée en rotation et on effectue en déplaçant laser et la buse deux passes hélicoïdales symétriques n et n+1 par rapport au plan vertical de symétrie de la pièce. Puis on effectue encore deux autres passes symétriques adjacentes aux deux premières et ainsi de suite jusqu'à recouvrir toute la surface.

## Revendications

1. Procédé de revêtement par laser (13) de pièces cylindriques (11) dans lequel après surfaçage de la surface à revêtir on fait tourner la pièce (11) autour de son axe, on émet un faisceau laser (14) partiellement focalisé sur la surface de la pièce (11) et on projette une poudre pré-alliée ayant la composition de l'alliage à déposer dans la zone (15) d'interaction entre le faisceau (14) et la pièce (11), caractérisé en ce qu'on effectue un premier cycle de dépôts de cordons selon plusieurs génératrices non jointives réparties sur la pièce (11), puis on effectue plusieurs cycles semblables au premier jusqu'à recouvrir la totalité de la surface de la pièce.

2. Procédé de revêtement par laser de pièces cylindriques selon la revendication 1, caractérisé en ce qu'on effectue un dépôt d'un premier cordon selon une génératrice puis la pièce est tournée de 180° autour de son axe et un cordon n°2 est déposé, puis la pièce est tournée de 90° et un cordon n°3 est posé et ensuite la pièce est tournée de 180° et un cordon n°4 est posé, ensuite on effectue à nouveau quatre passes en déposant le cordon n+4 à côté du cordon n et ainsi de suite jusqu'à recouvrir la surface de la pièce (11).

3. Procédé de revêtement par laser (13) de pièces cylindriques (11) dans lequel après surfaçage de la surface à revêtir on fait tourner la pièce (11) autour de son axe, on émet un faisceau laser (14) partiellement focalisé sur la surface de la pièce (11) et on projette une poudre pré-alliée ayant la composition de l'alliage à déposer dans la zone (15) d'interaction entre le faisceau (14) et la pièce (11), caractérisé en ce qu'on effectue des passes hélicoïdales sur une faible largeur de la pièce (11) en procédant par passes symétriques par rapport à un plan vertical orthogonal à l'axe de la pièce jusqu'à recouvrir la pièce.

4. Procédé selon l'une des revendications 1 à 3, caractérisé en ce que le laser est à CO₂.

5. Procédé selon l'une des revendications 1 à 4, caractérisé en ce que la surface à revêtir est refroidie.

## Claims

1. Method of using a laser (13) to hard face cylindrical parts (11) wherein after preparation of the surface to be covered the part (11) is rotated about its axis, a laser beam (14) is partially focused on the surface of the part (11) and a pre-alloyed powder having the composition of the alloy to be deposited is sprayed into the area (15) of interaction between the beam (14) and the part (11), characterised in that a first cycle deposits beads along a plurality of non-contiguous generatrices distributed over the part (11), after which a plurality of cycles similar to the first are effected until all of the surface of the part is covered.

2. Method according to claim 1 characterised in that a first bead is deposited along a generatrix, then the part is rotated 180° about its axis and a bead No 2 is deposited, then the part is rotated 90° and a bead No 3 is deposited, then the part is rotated 180° and a bead No 4 is deposited, and then four further passes are carried out depositing bead n + 4 alongside bead n and so on until all of the surface of the part (11) is covered.

3. Method of using a laser (13) to hard face cylindrical parts (11) wherein after preparation of the surface to be covered the part (11) is rotated about its axis, a laser beam (14) is partially focused on the surface of the part (11) and a pre-alloyed powder having the composition of the alloy to be deposited is sprayed into the area (15) of interaction between the beam (14) and the part (11), characterised in that helical passes symmetrical to a vertical plane orthogonal to the axis of the part are effected over a small width of the part (11) until the part is covered.

4. Method according to any one of claims 1 to 3 characterised in that the laser is a CO₂ laser.

5. Method according to any one of claims 1 to 4 characterised in that the surface to be covered is cooled.

## Patentansprüche

1. Verfahren zur Umhüllung zylindrischer Bauteile (11) durch Auftragsschweißen mit einem Laser (13), wobei man nach der Vorbereitung der zu bedeckenden Oberfläche das Bauteil (11) um seine Achse in Drehung versetzt und einen teilweise fokussierten Laserstrahl (14) auf die Oberfläche des Bauteils (11) richtet sowie ein vorlegiertes Pulver mit der Zusammensetzung der aufzubringenden Legierung in die Zone (15) injiziert, in der eine Wechselwirkung zwischen dem Laserstrahl (14) und dem Bauteil (11) erfolgt, dadurch gekennzeichnet, daß man einen ersten Zyklus durchführt, in dem Schweißwülste gemäß mehreren nicht benachbarten und über das Bauteil (11) verteilten Mantellinien aufgebracht werden, worauf weitere, dem ersten Zyklus ähnliche Zyklen folgen, bis die gesamte Oberfläche des Bauteils bedeckt ist.

2. Verfahren zur Umhüllung von zylindrischen Bauteilen mittels Laser gemäß Anspruch 1, dadurch gekennzeichnet, daß ein erster Schweißwulst gemäß einer Mantellinie aufgebracht wird und dann das Bauteil um 180° um seine Achse gedreht wird, worauf ein zweiter Wulst aufgebracht wird und dann das Bauteil wieder um 90° gedreht wird, worauf ein dritter Schweißwulst aufgebracht wird und dann das Bauteil nochmals um 180° gedreht wird, worauf ein vierter Schweißwulst aufgebracht wird, und daß dann erneut vier Durchgänge stattfinden, bei denen ein Schweißwulst n+4 jeweils neben dem Schweißwulst n aufgebracht wird usw., bis die ganze Oberfläche des Bauteils (11) bedeckt ist.

3. Verfahren zur Umhüllung von zylindrischen Bauteilen (11) durch Auftragsschweißen mit einem Laser (13), wobei man nach der Vorbereitung der zu bedeckenden Oberfläche das Bauteil (11) um seine Achse in Drehung versetzt und einen teilweise fokussierten Laserstrahl (14) auf die Oberfläche des Bauteils (11) richtet sowie ein vorlegiertes Pulver mit der Zusammensetzung der aufzubringenden Legierung in die Zone (15) injiziert, in der eine Wechselwirkung zwischen dem Laserstrahl (14) und dem Bauteil (11) erfolgt, dadurch gekennzeichnet, daß man spiralförmige Wülste über eine geringe Breite des Bauteils (11) aufbringt, indem man symmetrische Durchgänge bezüglich einer senkrechten Ebene orthogonal zur Achse des Bauteils durchführt, bis das Bauteil bedeckt ist.

4. Verfahren nach einem der Ansprüche 1 bis 3, dadurch gekennzeichnet, daß der Laser ein CO₂-Laser ist.

5. Verfahren nach einem der Ansprüche 1 bis 4, dadurch gekennzeichnet, daß die zu bedeckende Oberfläche gekühlt wird.
